# EUROPÄISCHE PATENTSCHRIFT

(11) **EP 0 635 658 B1**
(45) Veröffentlichungstag und Bekanntmachung des Hinweises auf die Patenterteilung: **13.01.1999**
(21) Anmeldenummer: 94110238.6
(22) Anmeldetag: 01.07.1994
(51) Int. Cl.: F16H 35/10, B25B 21/00, B25F 5/00, B25B 23/14

(54) **Umlaufgetriebe mit Drehmomentbegrenzer und dessen Verwendung in Handwerkzeugen**
Planetary gearing with torque limiter and its use in hand tools
Transmission à trains épicycloidaux équipée d'un limitateur de couple et son application dans des outils à main

(30) Priorität: 23.07.1993 DE 4324876
(43) Veröffentlichungstag der Anmeldung: 25.01.1995
(73) Patentinhaber: IMS MORAT SÖHNE GmbH, D-78166 Donaueschingen (DE)
(72) Erfinder: Enzmann, Bernd, D-78052 Villingen-Schwenningen (DE); Maus, Hansjörg, D-78166 Donaueschingen (DE)
(74) Vertreter: Patentanwälte Westphal, Buchner, Mussgnug Neunert, Göhring

(56) Entgegenhaltungen:
- EP-A- 0 074 241
- EP-A- 0 525 911
- US-A- 4 597 453
- US-A- 4 641 551

## Beschreibung

Die Erfindung betrifft ein Getriebe mit den Merkmalen des Oberbegriffs des Anspruchs 1 sowie dessen Verwendung.

Ein solches Getriebe ist aus EP-A-0 525 911 bekannt. Das Getriebe weist eine Überlastkupplung auf. Des weiteren ist ein Hohlrad vorgesehen, das stirnseitig mit einem Druckring in Reibschluß steht und bei einer auftretenden Überlast durchrutscht. Die Stirnseite des Hohlrades weist selbst Vorsprünge auf, die mit weiteren Vorsprüngen auf dem Druckring in Eingriff kommen.

Ein ähnliches Getriebe wird heute bereits in einem akkumulatorgetriebenen Elektroschrauber, einem sogenannten Akku-Schrauber, eingesetzt. Bei diesem akkumulatorgetriebenen Elektroschrauber wird die von einem Motor auf eine Antriebswelle bereitgestellte Umdrehungszahl über ein Umlaufgetriebe (Planetengetriebe) auf eine Abtriebswelle, die ein Schraubenfutter haltert, untersetzt. Zur Anpassung des Akku-Schraubers an unterschiedliche Belastungen ist eine Drehmomentbegrenzungseinrichtung in Form einer Überlastkupplung vorgesehen. Mit dieser Drehmomentbegrenzungseinrichtung können Schrauben mit einem vorgegebenen Drehmoment angezogen werden. Die Überlastkupplung weist ein die letzte Umlaufgetriebestufe umgebendes Hohlrad auf, das eine mit dem Planetenrad der letzten Stufe in Eingriff stehende Innenverzahnung enthält. Zusätzlich ist eine Druckfeder vorgesehen, die über einen Druckring das Hohlrad so lange axial gegen eine Anschlagwand drückt, daß dieses durch Reibschluß drehfest gehalten wird, solange eine vorgegebene Drehmomentbelastung nicht erreicht ist. Bei Überschreiten der vorgegebenen Drehmomentbelastung reicht dagegen die von der Federeinrichtung erzeugte Druckkraft auf das Hohlrad nicht mehr aus, so daß das Hohlrad zur Drehung freigegeben wird und zu rutschen beginnt.

Zur Erhöhung des Reibschlusses ist das Hohlrad stirnseitig auf der der Druckfeder zugewandten Seite mit wannenförmigen Vertiefungen versehen, in der im Falle, daß eine vorgegebene Drehmomentbelastung noch nicht erreicht ist, Kugeln eines Kugelringes unter Druck der Druckfeder sitzen. Wird dagegen die vorgegebene Drehmomentbelastung überschritten, so rutschen diese Kugeln aus den wannenförmigen Vertiefungen, so daß sich das Hohlrad zu drehen beginnt und dadurch eine Drehmomentbegrenzung einsetzt.

Aufgrund der dabei auftretenden hohen axialen Druck- und Reibbelastung des Hohlrades, besteht dieses in dem bekannten Getriebe aus einem Metall, vorzugsweise einem gesinterten Metall, da dieses große Festigkeit gewährleistet.

Das Herstellen solcher gesinterten Metallteile ist kompliziert und damit kostspielig. So muß Metallpulver zunächst in eine Form gegeben und der pulverförmige Stoff unter Druck und/oder Temperatureinwirkung bei einer Temperatur, die nicht unter dem Schmelzpunkt des Stoffgemisches liegt, verdichtet werden. Dabei kommt es zum Aufschmelzen und Zuammenbacken des Gutes an den Korngrenzen des Metallpulvers. In der Regel wird der herzustellende Formkörper in einem ersten Schritt vorgesintert und in einem zweiten Schritt zur maximalen Verdichtung hochgesintert.

Darüber hinaus zeichnet sich dieses bekannte Getriebe auch durch verhältnismäßig laute und damit unangenehme Laufgeräusche aus.

Getriebe von elektrisch angetriebenen Werkzeugen, wie beispielsweise Elektroschraubern, sind darüber hinaus aus DE 41 23 349 C1, DE 37 42 952 A1 sowie DE 27 26 818 B2 bekannt.

Die DE 41 23 349 C1 beschreibt einen Schrauber mit einem Getriebe, das ein Umlaufgetriebe mit einem Hohlrad und einer daran angekoppelten Überlastkupplung aufweist. Die Überlastkupplung besteht aus einer Druckfeder, welche axial auf die Stirnseite des zweiten Hohlrades des Planetengetriebes einwirkt. Hierzu ist zwischen der Druckfeder und der Stirnseite des zweiten Hohlrades eine sog. Rollenaufnahme zur Aufnahme von radial zueinander angeordneten Rollen sowie zwischen diesen Rollen liegenden Kugeln vorgesehen, die über eine Axialscheibe von der Druckfeder in die Zwischenräume der Rollen gedrückt werden. Bei Erreichen eines bestimmten Grenzdrehmomentes bewegen sich die Kugeln aus ihrer Lage zwischen den Rollen heraus, so daß auf das Hohlrad des Getriebes ein Gegendrehmoment übertragen und somit ein wirksamer Überlastschutz gewährleistet wird.

In DE 37 42 952 A1 ist eine motorgetriebene Maschine mit variabler Drehmomenteinstellung mit einem Motor und einem eine Arbeitsspindel antreibenden Planetengetriebe beschrieben. Das Planetengetriebe umfaßt ein drehbar gelagertes und bei Übersteigen eines einstellbaren Grenzdrehmomentes gegen die Wirkung einer Federkraft einen Motorabschalter betätigendes Hohlrad. Die Federkraft wird durch einen Torsionsstab bereitgestellt.

Die Überlasteinrichtung in DE 27 26 818 B2 eines Getriebes für ein elektrisch angetriebenes Werkzeug weist, ähnlich wie das Getriebe in DE 41 23 349 C1, Kupplungskugeln auf.

Der Erfindung liegt die Aufgabe zugrunde, das eingangs genannte Getriebe so weiterzubilden, daß die oben genannten Nachteile vermieden werden und zusätzlich eine einfache Montagemöglichkeit des Getriebes erreicht wird.

Diese Aufgabe wird mit den in Patentanspruch 1 angegebenen Merkmalen gelöst.

Vorteilhafte Ausgestaltungen der Erfindung sind in den Unteransprüchen angegeben.

Eine Verwendung des erfindungsgemäßen Getriebes ist Gegenstand des Anspruchs 9.

Die Erfindung besteht also im wesentlichen darin, das in der Überlastkupplung vorgesehene Hohlrad aus Kunststoff zu bilden und zwischen dem Hohlrad und der Federeinrichtung eine Schutzplatte, vorzugsweise eine metallische Nockenscheibe, anzuordnen. Das Material der Schutzplatte muß erfindungsgemäß eine größere mechanische Stabilität und Festigkeit als das Hohlrad aufweisen. Die Schutzplatte bzw. Nockenscheibe ist erfindungsgemäß drehfest mit dem Hohlrad in Verbindung, so daß die Druckkraft der Feder axial auf die Stirnseite des Hohlrades über die Schutzplatte bzw. metallische Nockenscheibe wirken kann und trotzdem die bei der Drehmomentbegrenzung auftretenden Reibungskräfte direkt an der Schutzplatte bzw. metallischen Nockenscheibe angreifen. Damit wird die verhältnismäßig weiche Stirnseite des aus Kunststoff bestehenden Hohlrades wirksam vor Abrieb bzw. Beschädigungen infolge des Rutschens der Überlastkupplung geschützt.

Ein weiterer Vorteil der erfindungsgemäßen Ausbildung des Getriebes besteht in einem leisen Laufgeräusch. Dies liegt daran, daß erfindungsgemäß die in Kunststoff ausgebildeten Zahnräder des Umlaufgetriebes mit Kunststoffzähnen der Innenverzahnung des Hohlrades kämmen und bei Überlast das aus Kunststoff bestehende Hohlrad an der Innenwandung des ebenfalls aus Kunststoff gebildeten Getriebegehäuses reibt, wodurch gleiche Materialien miteinander berührend in Kontakt treten. Bei dem eingangs erwähnten bekannten Getriebe berührt dagegen das aus Metall gebildete Hohlrad die aus Metall gebildeten Zahnräder des Umlaufgetriebes, so daß sich ein vergleichsweise höheres Laufgeräusch als beim erfindungsgemäßen Getriebe einstellt.

Eine Weiterbildung der Erfindung sieht vor, daß die Schutzplatte bzw. metallische Nockenscheibe lösbar auf dem Hohlrad aufsitzt und mit diesem in drehfester Verbindung steht. Der wesentliche Vorteil dieser Ausbildung liegt darin, daß bei erfolgtem Abrieb der Schutzplatte oder Nockenscheibe nicht das gesamte Hohlrad ausgewechselt werden muß, sondern lediglich die Schutzplatte bzw. Nockenscheibe zu ersetzen ist.

Zur lösbaren Verbindung von Schutzplatte bzw. Nockenscheibe und Hohlrad ist das Hohlrad stirnseitig mit Ausnehmungen und die Schutzplatte bzw. metallische Nockenscheibe mit Vorsprüngen versehen, welche in die Ausnehmungen des Hohlrades passen und dort die Schutzplatte bzw. Nockenscheibe in bezug auf das Hohlrad in Umlaufrichtung rutschfest halten. So wird gewährleistet, daß bei stillstehendem Hohlrad, also während einer Drehmomentübertragung von Antriebswelle auf Abtriebswelle unterhalb einer vorgegebenen Drehmomentbelastung, auch die Schutzplatte bzw. Nockenscheibe stillsteht. Beginnt dagegen bei Überschreiten einer vorgegebenen Drehmomentbelastung das Hohlrad zu rutschen bzw. sich zu drehen, wird die Schutzplatte bzw. Nockenscheibe vom Hohlrad mitgenommen.

Die metallische Nockenscheibe besteht vorzugsweise aus einem tiefziehbaren und prägbaren Metall, so daß sich die Nockenscheibe in einfacher Weise durch einen Stanzvorgang herstellen läßt. Die Nockenscheibe kann daher als einfaches Stanzteil ausgebildet sein, was die Herstellung wesentlich erleichtert.

Das erfindungsgemäße Hohlrad besteht in einer bevorzugten Ausführungsform aus einem spritzgießbaren Thermoplast, der eine ausreichende mechanische Stabilität aufweist. Als spritzgießbarer Thermoplastkunststoff kann beispielsweise ein Polyamid 6.6 mit Mineralfüllung vorgesehen werden.

Eine besonders montagefreundliche Ausbildung des Getriebes sieht eine Federeinrichtung in Form einer Druckfeder vor, die über einen feststehenden Druckring axialen Druck auf die metallische Nockenscheibe und damit das Hohlrad ausübt. Die Nockenscheibe und der Druckring liegen hierfür flächig aneinander. Zur Erhöhung der Reibungskräfte sind die sich gegenüberliegenden Flächen von Druckscheibe und Nockenring mit Verkeilungselementen, vorzugsweise ringförmig auf dem Druckring bzw. der Nockenscheibe verteilte Nasen, versehen. Der Druckring besteht in bevorzugter Weise wie der metallische Nockenring aus einem tiefziehbaren und prägbaren Metall, so daß er auch in einfacher Weise durch einen Stanzvorgang aus einer Metallplatte herstellbar ist.

Das erfindungsgemäße Getriebe eignet sich bevorzugt zur Verwendung in einem akkumulatorgetriebenen Elektrobohr- bzw. Elektroschraubwerkzeug. Dadurch, daß die meisten der für das Getriebe vorgesehenen Bestandteile aus Kunststoff bestehen, zeichnet sich ein solches akkumulatorgetriebe Elektrobohr- bzw. -schraubwerkzeug durch ein verhältnismäßig geringes Gewicht aus. Im Vergleich zu den bisher bekannten akkumulatorgetriebenen Elektrobohr- bzw. -schraubwerkzeugen wird dieses Gewicht durch den Einsatz eines Hohlrades aus Kunststoff weiter vermindert.

Die Erfindung wird im folgenden anhand eines Ausführungsbeispieles im Zusammenhang mit drei Figuren näher erläutert. Es zeigen:
- Figur 1: eine Antriebseinheit für einen Akku-Schrauber mit einem erfindungsgemäßen Getriebe, und
- Figur 2: eine Explosionsdarstellung der Bestandteile Hohlrad, Nockenscheibe, Druckring sowie Druckfeder einer im Getriebe nach Figur 1 enthaltenen Drehmomentbegrenzungseinrichtung.

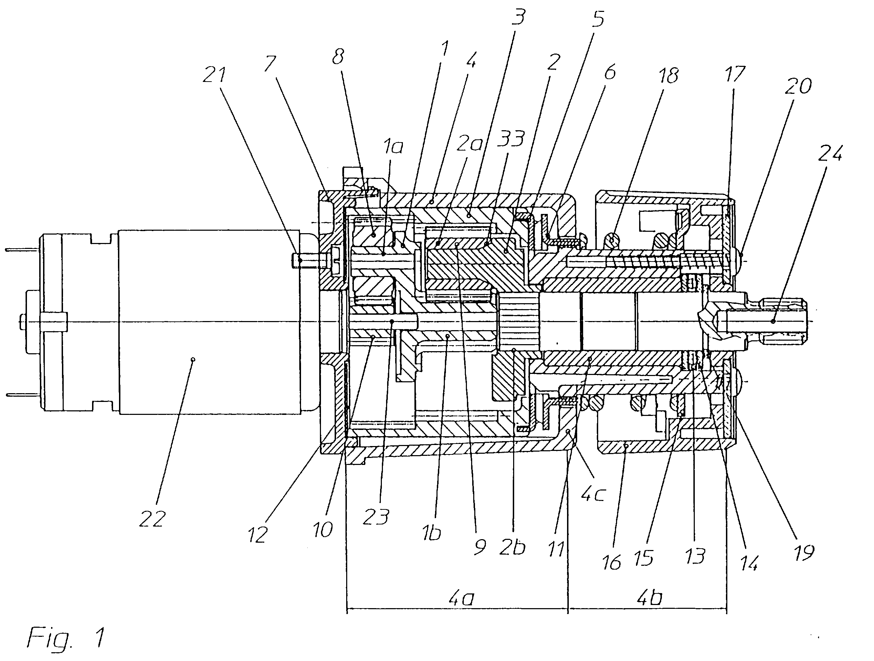

In Figur 1 ist die Antriebseinheit für einen Akku-Schrauber dargestellt. Die Antriebseinheit weist einen Elektromotor 22 mit einer in ein Getriebegehäuse 4 ragenden Antriebswelle 23 auf. Auf einer der Antriebswelle 23 des Elektromotors 22 zugewandten Seite ist über Zylinderschrauben 21 ein Motorflansch 7 festgeschraubt. An diesem Motorflansch 7 sind vorzugsweise Schnappverbindungen zur Halterung des Getriebegehäuses 4 angeordnet. Innerhalb des Getriebegehäuses 4 ist ein Umlaufgetriebe angeordnet, um eine Drehzahluntersetzung von der Antriebswelle 23 des Elektromotors 22 auf eine Abtriebswelle 24 zu erreichen. Die Antriebswelle 23 und Abtriebswelle 24 liegen auf einer gemeinsamen Achse A. Auf der Abtriebswelle 24 ist im Falle eines Akku-Schraubers ein geeignetes, der besseren Übersichtlichkeit wegen in der Figur 1 nicht dargestelltes Schraubenfutter befestigt.

Das Getriebegehäuse 4 ist in der Ausführungsform von Fig. 1 zylinderförmig gestaltet, wobei das Getriebegehäuse im vorderen, der Antriebswelle 23 zugeordneten Bereich 4a einen größeren Durchmesser aufweist, als in einem hinteren Bereich 4b, der der Abtriebswelle 24 zugeordnet ist.

Im vorderen Bereich 4a ist innerhalb des Getriebegehäuses 4 das bereits erwähnte Umlaufgetriebe in Form eines zweistufigen Planetengetriebes enthalten. Dieses zweistufige Planetengetriebe weist einen ersten Planetenträger 1 mit in Richtung zum Elektromotor 22 weisenden drei Bohrspindeln la sowie einen Planetenträgersteg 1b auf, wobei die Achse des Planetenträgersteges kollinear zur Achse der Antriebs- bzw. Abtriebsachse A ist. Auf den Bohrspindeln la des ersten Planetenträgers 1 sind jeweils als Planetenräder 8 bezeichnete Zahnräder, vorzugsweise aus Kunststoff, drehbar aufgesteckt, die mit einem auf der Antriebswelle 23 des Elektromotors 22 angeordneten Motorritzel 10 in Eingriff stehen. Obwohl der erste Planetenträger 1 prinzipiell mit nur einer Bohrspindel la ausgerüstet sein kann, empfiehlt es sich aus Gründen eines besseren Gleichlaufes mehrere, vorzugsweise drei um 120° zueinander versetzte Bohrspindeln la vorzusehen.

Das Umlaufgetriebe weist darüber hinaus einen zweiten Planetenträger 2 mit vorzugsweise drei Bohrspindeln 2a auf. Der Planetenträgersteg 2b dieses zweiten Planetenträgers 2 ist drehfest mit der Abtriebswelle 24 in Verbindung. Auf den Bohrspindeln 2a des zweiten Planetenträgers 2 sind zweite Planetenräder 9 drehbar aufgesetzt, welche mit auf dem Planetenträgersteg 1b des ersten Planetenträgers 1 angebrachten Zähnen in Eingriff stehen.

Bei einer derartigen Ausbildung des Umlaufgetriebes als zweistufiges Planetengetriebe wird eine variable Untersetzung bei unterschiedlicher Drehmomentbelastung erzielt. Die Übersetzung der beiden Stufen des in Fig. 1 gezeigten Planetengetriebes kann hierfür beispielsweise so gewählt werden, daß die Grundübersetzung der ersten Stufe 6:1 und die Grundübersetzung der zweiten Stufe 4,8:1 ist.

Zur Anpassung des Akku-Schraubers an unterschiedliche Belastungen ist eine Drehmomentbegrenzungseinrichtung in Form einer Überlastkupplung vorgesehen. Diese besteht bei der in Fig. 1 dargestellten Ausführungsform aus einem zylinderförmigen Hohlrad 3, einer metallischen Nockenscheibe 5, einem metallischen Druckstück 6 sowie einer als Spiralfeder ausgebildeten Druckfeder 18. Das aus Kunststoff, beispielsweise aus Polyamid 6.6 mit Mineralfüllung, bestehende Hohlrad 3 sitzt innerhalb des Getriebegehäuses 4 und ist mit einer abgestuften Innenverzahnung versehen, so daß die Planetenräder 8 der ersten Stufe und die Planetenräder 9 der zweiten Stufe des Planetengetriebes mit der jeweiligen Innenverzahnung des Hohlrades 3 in Eingriff stehen. Das Hohlrad 3 wird durch axialen Druck der Druckfeder 18 über das Druckstück 6 und den Nockenring 5 an eine innerhalb des Getriebegehäuses 4 am Motorflansch 7 angeordnete Anschlagwand 12, hier eine Anschlagscheibe aus Metall, gedrückt. Dieser Anpreßdruck ist von einem Einstellring 16 durch eine Bedienperson des Akku-Schraubers einstellbar. Hierfür ist die Vorspannung der Druckfeder 18 mittels einer innerhalb des Drehringes 16 gelegenen Kurve einstellbar. Damit wird das Hohlrad 3 mit einem von der Druckfeder 18 über das Druckstück 6 und den Nockenring 5 ausgeübten Druck auf die Anschlagwand 12 gepreßt. Das Hohlrad 3 steht dabei so lange fest, bis die Drehmomentbelastung des Akku-Schraubers die Reibungskraft überschreitet. Überschreitet die Drehmomentbelastung diesen Wert, rutscht das Hohlrad 3 durch und beginnt sich zu drehen. Somit wird eine wirksame Drehmomentbegrenzung des erfindungsgemäßen Getriebes erreicht und somit eine Schraube bis zu einem vorgegebenen Drehmoment angezogen.

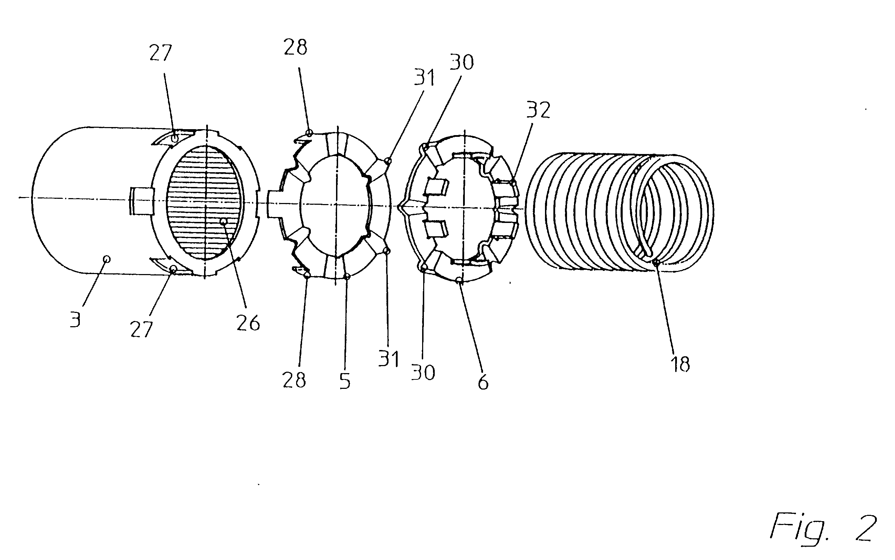

Die Anordnung von Hohlrad 3, Nockenscheibe 5, Druckstück 6 sowie Druckfeder 18 wird im Zusammenhang mit Fig. 2 noch detailliert erläutert.

Der Vollständigkeit halber ist noch zu erwähnen, daß im Ausführungsbeispiel von Fig. 1 die Antriebswelle 24 im hinteren Bereich 46 des Getriebegehäuses 4 von einem Spindellager 11 umgeben ist, an deren Stirnseite in Richtung Abtriebswelle 24 sich ein Kugelkäfig 13 sowie eine Axialscheibe 14 mit Wellensicherungsring 19 anschließt. Der oben erwähnte Einstellring 16 ist stirnseitig mit einer Abdeckscheibe 17 abgedeckt und von Schrauben 20 am Getriebegehäuse 4 gehaltert. Desweiteren ist ein Federspannring 15 zwischen Druckfeder 18 und Einstellring 16 angeordnet.

In Fig. 2 ist das Hohlrad 3, die metallische Nockenscheibe 5, der Druckring 6 sowie die Druckfeder 18 in Explosionsdarstellung gezeigt. Das mit einer Innenverzahnung 26 versehene Hohlrad 3 ist zur Seite der metallischen Nockenscheibe 5 hin mit Ausnehmungen 27 versehen, in die Vorsprünge 28 der Nockenscheibe 5 eingreifen, so daß die Nockenscheibe 5 drehfest mit dem Hohlrad 3 im zusammengebauten Zustand verbunden ist. Der Nockenring 5 und der Druckring 6 sind bevorzugt als Stanzteile ausgebildet und weisen auf den sich gegenüberliegenden Flächen Verkeilungselemente 30, 31 auf. Diese Verkeilungselemente 30, 31 sind in der Darstellung von Fig. 2 als vorspringende, ringförmig am Nockenring 5 bzw. Druckring 6 gebildete Nasen 31 bzw. 30 ausgeführt. Beim flächigen Aneinanderliegen von Nockenscheibe 5 und Druckring 6 bewirken diese Nasen, daß ein erhöhter Reibungswiderstand überwunden werden muß, bis sich das Hohlrad 3 aufgrund der Drehmomentbelastung samt Nockenscheibe 5 aus der Verkeilung löst und zu drehen beginnt. Der Druckring 6 weist auf der der Druckfeder 18 zugewandten Seite axial in Richtung Druckfeder 18 vorstehende Stifte 32 auf, auf die die Druckfeder 18 ihren Druck ausübt. Diese Vorsprünge 32 ragen durch Öffnungen in einem radialen Wandabschnitt 4c (vgl. Fig. 1) des Getriebegehäuses 4, so daß die außerhalb des Getriebegehäuses 4 angeordnete Druckfeder 18 aufgrund ihrer Vorspannung einen axialen Druck auf das innerhalb des Getriebegehäuses 4 angeordnete Hohlrad 3 ausüben kann.

Es ist hier anzumerken, daß die erfindungsgemäße Gestaltung von Nockenring 5 und Druckring 6 nicht auf die in Fig. 2 dargestellte Ausführungsform beschränkt ist. Es können vielmehr auch andere Gestaltungen von Nockenring 5 und Druckstück 6 vorgesehen werden. So können beispielsweise auf der Seite der Nockenscheibe 5, die dem Druckring 6 gegenüberliegt, wannenartige Vertiefungen vorgesehen werden und auf der gegenüberliegenden Seite des Druckrings 6 kugelförmige Erhöhungen. Im einfachsten Fall weist weder der Nockenring 5 noch der Druckring 6 Verkeilungselemente auf. Allerdings setzt dabei bereits bei geringer Drehmomentbelastung ein Durchrutschen ein. Das Getriebegehäuse 4 von Fig. 1 weist vorzugsweise eine zylinderförmige Innenwandung auf. Im Bereich des Hohlrades 3 ist die Innenwandung des Getriebegehäuses 4 partiell konisch ausgebildet, so daß sich ausgehend vom Motorflansch 12 in Richtung zur Nockenscheibe 5 eine sich vergrößernder Spalt zwischen Hohlradaußenwand und Getriebegehäuseinnenwand ausbildet, so daß dadurch ein optimales Schmiermitteldepot vorhanden ist. Das Getriebegehäuse 4 kann für diesen Zweck beispielsweise vier ringartig zueinander angeordnete konische Wandabschnitte aufweisen, die von Wandabschnitten, die einen konstanten Innendurchmesser aufweisen, unterbrochen sind. Diese partiell konische Ausbildung der Innenwandung des Getriebegehäuses 4 ist in Fig. 1 strichliniert an der unteren Wandung dargestellt.

Obwohl im Zusammenhang mit dem Ausführungsbeispiel stets von einer metallischen Nockenscheibe die Rede war, ist die Erfindung hierauf nicht beschränkt. Die Nockenscheibe kann auch aus anderen Materialien bestehen, sofern das Material eine ausreichende mechanische Festigkeit aufweist.

## Patentansprüche

1. Getriebe mit den Merkmalen:
- ein Getriebegehäuse (4);
- ein innerhalb des Getriebegehäuses (4) angeordnetes Umlaufgetriebe (1, 2, 8, 9) zur Drehzahländerung von einer Antriebswelle (23) auf eine Abtriebswelle (24);
- einer Überlastkupplung mit
- einem das Umlaufgetriebe (1, 2, 3, 8, 9) umgebenden Hohlrad, welches eine mit dem Umlaufgetriebe in Eingriff stehende Innenverzahnung aufweist,
- einer auf das Hohlrad (3) drückenden Federeinrichtung (18), um das Hohlrad (3) so lange axial gegen eine Anschlagwand (12) zu drücken, daß das Hohlrad (3) durch Reibschluß drehfest gehalten wird, bis eine vorgegebene Drehmomentbelastung erreicht ist und bei Überschreiten der vorgegebenen Drehmomentbelastung das Hohlrad (3) zur Drehung freigegeben wird;
- einen radial feststehend angeordneten Druckring (6), der zwischen Hohlrad (3) und Druckfeder (18) angeordnet ist;
gekennzeichnet durch die Merkmale:
- das Hohlrad (3) besteht aus Kunststoff;
- eine Schutzplatte (5), die zwischen Hohlrad (3) und Druckfeder (18) angeordnet ist;
- die Schutzplatte (5) ist drehfest mit dem Hohlrad (3) in Verbindung und besteht aus einem Material mit einer größeren mechanischen Festigkeit als das Hohlrad (3) ;
- die Schutzplatte (5) und der Druckring (6) sind auf sich gegenüberliegenden Flächen mit Verkeilungselementen (30, 31) versehen und liegen mit diesen Flächen für eine Bewegungsübertragung bis zu einer vorgegebenen Drehmomentbelastung flächig aneinander.

2. Getriebe nach Anspruch 1, dadurch gekennzeichnet, daß die Schutzplatte (5) lösbar am Hohlrad (3) aufsitzt.

3. Getriebe nach Anspruch 1 oder 2, dadurch gekennzeichnet, daß das Hohlrad (3) stirnseitig mit Ausnehmungen (27) und die Schutzplatte (5) mit Vorsprüngen (28) versehen sind und die Vorsprünge (28) der Schutzplatte (5) in den Ausnehmungen (27) des Hohlrades (3) in Umlaufrichtung rutschfest angeordnet sind.

4. Getriebe nach einem der Ansprüche 1 bis 3, dadurch gekennzeichnet, daß der Kunststoff, aus dem das Hohlrad (3) besteht, ein spritzgießbarer Thermoplastkunststoff, vorzugsweise Polyamid 6.6 mit Mineralfüllung, ist.

5. Getriebe nach einem der Ansprüche 1 bis 4, dadurch gekennzeichnet, daß die Verkeilungselemente (30, 31) auf dem Druckring (6) und der Schutzplatte (5) ringförmig verteilte Nasen sind.

6. Getriebe nach einem der Ansprüche 1 bis 5, dadurch gekennzeichnet, daß die Schutzplatte (5) eine metallische Nockenscheibe ist.

7. Getriebe nach Anspruch 6, dadurch gekennzeichnet, daß die metallische Nockenscheibe (5) aus einem tiefziehbaren und prägbaren Metall besteht.

8. Getriebe nach Anspruch 6 oder 7, dadurch gekennzeichnet, daß die Nockenscheibe (5) ein Stanzteil ist.

9. Verwendung des Getriebes nach einem der Ansprüche 1 bis 8 in einem akkumulatorgetriebenen Elektrowerkzeug, insbesondere in einem Bohr- bzw. Schraubwerkzeug.

## Claims

1. Gear unit having the features:
- a gear unit housing (4);
- a planetary gear unit (1, 2, 8, 9) disposed inside the gear unit housing (4) for altering the rotary speed from a drive shaft (23) to an output shaft (24) ;
- an overload clutch having
- an annular gear which surrounds the planetary gear unit (1, 2, 3, 8, 9) and which has internal teeth which are in engagement with the planetary gear unit,
- a spring device (18) which presses on the annular gear (3) in order to press the annular gear (3) so long axially against a detente wall (12) that the annular gear (3) is prevented from rotation by friction locking until a predetermined torque loading has been reached and, when the predetermined torque loading is exceeded, the annular gear (3) is released for rotation,
- a pressure ring (6) which is disposed radially in a fixed manner and which is disposed between annular gear (3) and compression spring (18),
characterized by the features:
- the annular gear (3) is composed of plastics material,
- a guard plate (5) which is disposed between annular gear (3) and compression spring (18),
- the guard plate (5) is joined in a rotationally secured manner to the annular gear (3) and is composed of a material having a greater mechanical strength than the annular gear (3),
- the guard plate (5) and the pressure ring (6) are provided with keying elements (30, 31) on oppositely situated surfaces and are planarly in contact with one another for a transmission of motion up to a predetermined torque loading.

2. Gear unit according to Claim 1, characterized in that the guard plate (5) is detachably seated on the annular gear (3).

3. Gear unit according to Claim 1 or 2, characterized in that the annular gear (3) is provided on its face side with recesses (27) and the guard plate (5) is provided with projections (28) and the projections (28) of the guard plate (5) are disposed in a non-slipping manner in the recesses (27) of the annular gear (3) in the direction of rotation.

4. Gear unit according to one of Claims 1 to 3, characterized in that the plastics material of which the annular gear (3) is composed is an injection-mouldable thermoplastic material, preferably nylon 66 having a mineral filling.

5. Gear unit according to one of Claims 1 to 4, characterized in that the keying elements (30, 31) on the pressure ring (6) and the guard plate (5) are annularly distributed protuberances.

6. Gear unit according to one of Claims 1 to 5, characterized in that the guard plate (5) is a metallic cam disc.

7. Gear unit according to Claim 6, characterized in that the metallic cam disc (5) is composed of a deep-drawable and stampable metal.

8. Gear unit according to Claim 6 or 7, characterized in that the cam disc (5) is a stamped part.

9. Use of the gear unit according to one of Claims 1 to 8 in a storage-battery-driven electrical tool, in particular in a drill or screw-driver tool.

## Revendications

1. Transmission ayant les caractéristiques suivantes :
- un boîtier de transmission (4),
- une transmission périphérique (1, 2, 3, 8, 9) logée à l'intérieur du boîtier (4) pour modifier la vitesse de rotation d'un arbre d'entrée (23) vers une arbre de sortie (24),
- un embrayage de surcharge comprenant :
∗ une roue creuse entourant la transmission périphérique (1, 2, 3, 8, 9) qui comporte une denture intérieure en prise avec la transmission périphérique,
∗ un dispositif à ressort (18) s'appuyant contre la roue creuse (3) pour pousser la roue creuse (3) axialement contre une paroi de butée (12) pour que la roue creuse (3) soit maintenue solidairement en rotation par une liaison par friction, jusqu'à ce que l'on atteigne le couple de surcharge, prédéterminé, et en cas de dépassement de ce couple de surcharge prédéterminé, la roue creuse (3) est libérée en rotation,
∗ une bague de pression (6) montée radialement fixe, entre la roue creuse (3) et le ressort de compression (18),
caractérisé par les points suivants :
- la roue creuse (3) est en matière plastique,
- une plaque de protection (5) est prévue entre la roue creuse (3) et le ressort de compression (18),
- la plaque de protection (5) est reliée solidairement en rotation à la roue creuse (3) et elle est en une matière ayant une résistance mécanique supérieure à celle de la roue creuse (3),
- la plaque de protection (5) et la bague de pression (6) sont munies d'éléments en forme de coin (30, 31) sur leur surface en regard et viennent prendre par ces surfaces, par une prise de surface pour transmettre un mouvement jusqu'à une surcharge de couple prédéterminée.

2. Transmission selon la revendication 1,
caractérisée en ce que
la plaque de protection (5) est montée de manière amovible sur la roue creuse (3).

3. Transmission selon la revendication 1 ou 2,
caractérisée en ce que
la roue creuse (3) comporte dans sa face frontale des cavités (27) et la plaque de protection (5) est munie de parties en saillie (28) et les parties en saillie (28) de la plaque de protection (5) sont prévues dans les cavités (27) de la roue creuse (3), de manière antidérapante dans la direction périphérique.

4. Transmission selon l'une des revendications 1 à 3,
caractérisée en ce que
la matière plastique dans laquelle est réalisée la roue creuse (3) est une matière thermoplastique susceptible d'être injectée, de préférence un polyamide 6.6 avec charge minérale.

5. Transmission selon l'une revendications 1 à 4,
caractérisée en ce que
les éléments en forme de coin (30, 31) sur la bague de pression (6) et la plaque de protection (5) sont des becs répartis suivant une forme d'anneau.

6. Transmission selon l'une revendications 1 à 5,
caractérisée en ce que
la plaque de protection (5) est un disque à came, métallique.

7. Transmission selon la revendication 6,
caractérisée en ce que
le disque à came métallique (5) est en un métal susceptible de subir un emboutissage profond et de recevoir une empreinte.

8. Transmission selon la revendication 6 ou 7,
caractérisée en ce que
le disque à came (5) est une pièce matricée.

9. Application de la transmission selon l'une des revendications 1 à 8, à un outil électrique entraîné par un accumulateur notamment outil de perçage ou de vissage.
